# EUROPEAN PATENT SPECIFICATION

(11) **EP 1 986 843 B1**
(45) Date of publication and mention of the grant of the patent: **10.06.2009**
(21) Application number: 07700659.1
(22) Date of filing: 22.01.2007
(51) Int. Cl.: B29C 70/54, B62J 1/00, B29L 31/58

(54) **PROCESS FOR MAKING INTEGRAL ELASTIC SUPPORTS**
VERFAHREN ZUR HERSTELLUNG INTEGRALER ELASTISCHER STÜTZEN
PROCESSUS POUR FABRIQUER DES SUPPORTS ÉLASTIQUES INTÉGRAUX

(30) Priority: 31.01.2006 IT VI20060032
(43) Date of publication of application: 05.11.2008
(73) Proprietor: SELLE ROYAL S.P.A., 36050 Pozzoleone (Vicenza) (IT)
(72) Inventor: SEGATO, Stefano, I-36100 Vicenza (IT)
(74) Representative: Feltrinelli, Secondo Andrea
(86) International application number: PCT/IB2007/050212
(87) International publication number: WO 2007/088495

(56) References cited:
- EP-A- 0 410 599
- EP-A- 0 549 110
- EP-A2- 0 415 870
- EP-A2- 0 903 321
- EP-B1- 0 653 279
- WO-A-20/05051629
- WO-A-20/07020571
- WO-A-20/07043876

## Description

### Field of the invention

The present invention is applicable to the field of sport and leisure accessories and particularly relates to a process for making integral elastic supports as well as to integral elastic supports obtained by such process.

The invention further relates to a mold for making such supports.

Typical examples of integral elastic supports that can be formed according to the present invention include seat backrests, headrests, armrests and seats for anatomic chairs, especially designed for elderly and physically challenged people, footwear insoles, orthopedic and non-orthopedic mattresses, saddles and handlebars for bicycles, cycles, motorcycles and the like.

### State of the Art

Elastic supports of the above type are known to generally comprise a base member of rigid or semirigid material, a filling member made of a resilient material, usually polyurethane resin and/or gel, and a sheet cover element, usually of imitation leather or the like, which is designed to contact a seated user.

Various processes for forming such types of supports are also known, which are all intended to join together the above elements, in one or more steps, to form a comfortable and resistant final product.

EP-B1-0653279, by the applicant hereof, discloses a process for making supports of the above mentioned type, which comprises a step in which a male - female mold to form a resilient pad member to be associated to a rigid or semi-rigid frame and to be possibly covered by a cover member which is designed to contact a seated user. This process comprises a step of heating the above components, during which the pad member, initially at the liquid state, cures to its final configuration.

While this solution fulfils the intended objects, it still has the apparent drawback that, during the above heating step, the air in the mold is "trapped" between the components of the support, and considerably affects the fit between the parts and generally the mechanical properties of the final product.

From WO2005/051629 a process is known having all the features of the preamble of the claim 1.

### Summary of the invention

The object of this invention is to overcome the above drawbacks, by providing a process for making integral elastic supports that is highly efficient and relatively cost effective

A particular object is to provide a process that allows to form integral elastic supports having good mechanical properties.

A further object is to provide an easily repeatable process that allows to maximize the yield.

These and other objects, as better explained hereinafter, are fulfilled by a process for making integral elastic supports as defined in claim 1.

Thanks to this particular configuration, the support of the invention has excellent mechanical properties, due to vacuum curing of the composite material.

Advantageously, the pad member may be formed and attached to the frame upon formation of the latter.

In a preferred non exclusive embodiment, the pad member may be at least partly preformed and attached to the frame upon formation of the latter.

### Brief Description of the Drawings

Further features and advantages of the invention will be more apparent from the detailed description of one preferred but non-exclusive embodiment of a process according to the invention, which is described as a non-limiting example with the help of the annexed drawings, in which:
FIG. 1 is a partially cut-away view of a finished integral elastic support that can be formed with the method of the invention;
FIG. 2 is an exploded perspective view of a mold that can be used for carrying out the method of the invention;
FIG. 3 is a view of a step of the method of the invention;
FIG. 4 is a view of another step of the method of the invention;
FIG. 5 is a view of a further step of the method of the invention;
FIG. 6 is a view of yet another step of the method of the invention;
FIG. 7 is a sectional view of the mold of FIG. 2 in the closed state, in a further step of the method of the invention.

### Detailed description of a preferred embodiment

Referring to the above figures, the method of the invention is particularly suitable for making integral elastic supports, such as backrests, headrests, armrests and seats for anatomic chairs, especially designed for elderly and physically challenged people, footwear insoles, orthopedic and non-orthopedic mattresses, saddles and handlebars for bicycles, cycles, motorcycles and the like.

The integral elastic support, generally designated by numeral 1, comprises a substantially rigid or semi-rigid frame 2 of composite material and a pad member 3.

The term "composite material" as used herein is intended as a material comprising an air permeable core, preferably but without limitation of the fibrous type, such as carbon fiber, glass fiber, Kevlar fiber or the like, embedded in a resin matrix, preferably of the thermosetting type.

Nevertheless, any other composite material may be used without departure from the scope as defined in the annexed claims.

According to the invention, the frame 2 is made by vacuum forming and curing and is stably attached to the pad member 3.

Preferably, the frame 2 will be formed by the steps described below.

First, an openable mold 4 is provided, having at least one inner cavity 5 of a predetermined shape conforming to the external shape of the support to be formed.

As used herein, the term "provision" and derivatives thereof, designates the preparation of a relevant component for a relevant process step, including any preventive treatment designed for optimal performance of such relevant step, from simple opening to any preheating, process residue cleaning or similar operations.

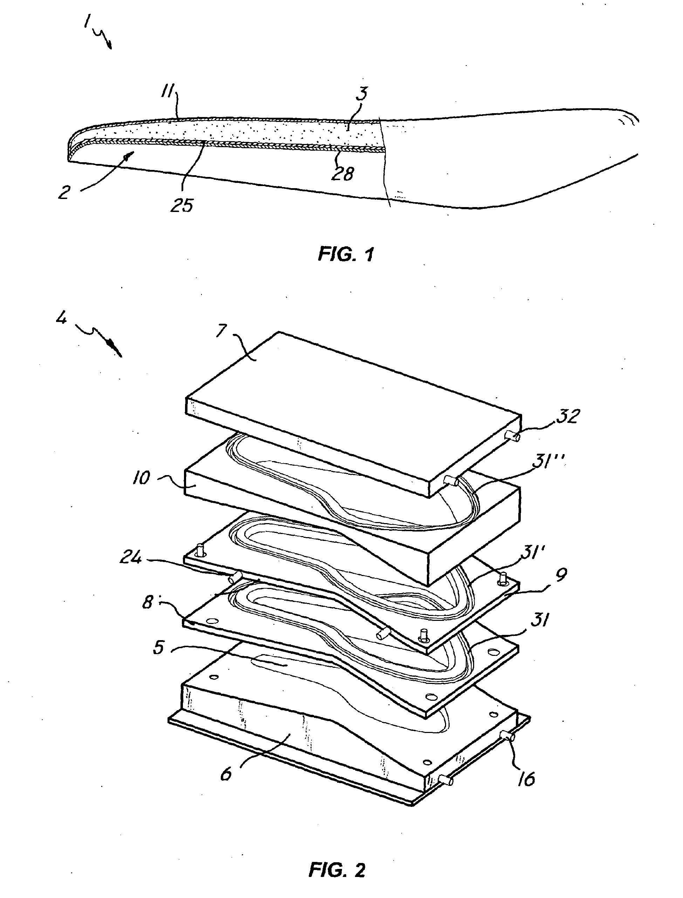

As shown in FIG. 2, the mold 4 may comprise a female part 6, including the cavity 5, a male part 7, acting as a cover and hermetically closing onto the female part 6, and three interface plates 8, 9 and 10, whose functions will be better shown hereafter.

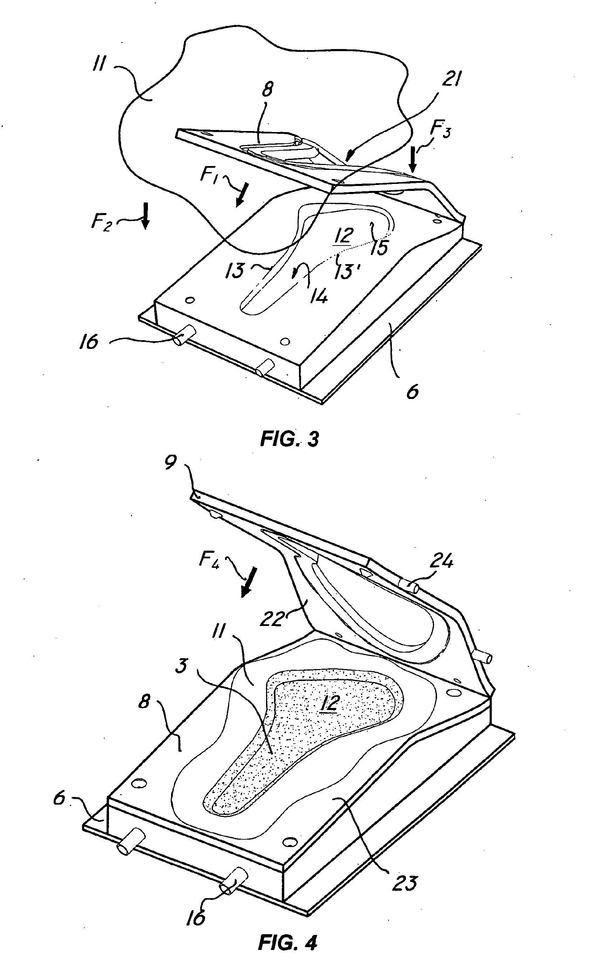

In the next step, as shown in FIG. 3, the mold 4 may be opened and a first layer 11 of a first airtight material may be deposited into the cavity 5 to form a chamber 12 with side walls 13, 13', a bottom wall 14 and a top opening 15.

Advantageously, the first layer of airtight material 11 may be made of a polymeric material, preferably thermoplastic polyurethane or polyamide, to form a structure substantially integral with the layers or members in direct contact therewith, thereby imparting particular mechanical properties to the whole assembly, ensuring resistance against shocks, weather or other external agents, abrasion.

Also, conveniently, the above polymeric material may be at least partly optically transparent, to allow vision of the underlying layers, thereby allowing to readily confirm any rupture or discontinuity in the structure.

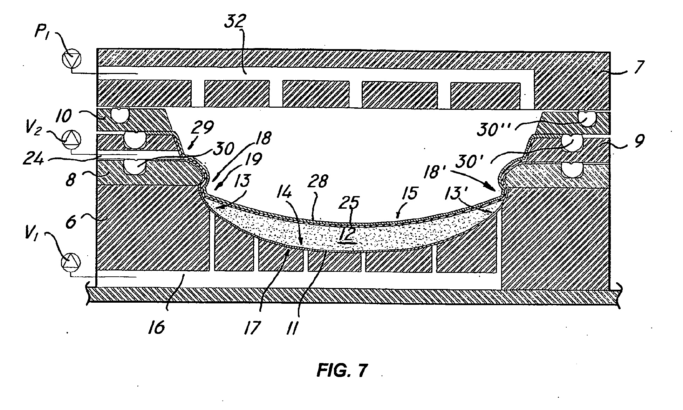

Furthermore, to enhance adhesion between the various components of the support, especially at the edges 18, 18' of the support, the layer 11 may cooperate with the first interface plate 8 to form an undercut area 19, as shown in FIG. 7.

In operation, the undercut 19 will be formed by first joining the plate 8 to the female part 6 in the direction of arrow F₁, and then by depositing the first airtight layer 11 onto said plate, in the direction of arrows F₂ and F₃. Then, the second interface plate 9 may be conveniently placed on the plate 8, with the bottom surface 22 cooperating with the top surface 23 of the plate 8 to prevent any undesired displacement of the first airtight layer 11. Now, to enhance adhesion of the first airtight layer 11 to the bottom of the cavity 5, special means may be employed, such as first vacuum means V₁ connected to a pipe 16, to be operative on the outer surface 17 of the layer 11 thereby preventing the formation of undesired folds in the layer 11.

It will be understood that the undercut 19 may be formed using any other sequence of steps without departure from the scope as defined in the annexed claims. For example, the layer 11 may be first deposited onto the female part 6, and then the end portions of the layer 11 may be introduced into the opening 21 of the plate 8, whereupon the latter is closed onto the female part 6.

The interface plate 8 may be so sized that the walls 13, 13' of the chamber 12 are at least partly undercut relative to the plate 8. Particularly, the opening 21 of the latter may be slightly smaller than the cavity 15 to form the undercut 19 as shown in FIG. 7. The plate 8 may be further composed of two complementary parts, which are longitudinally divided with respect to the saddle, to allow disengagement of the finished integral elastic support.

The second plate 9 may further comprise a duct 24 connectable to second external vacuum means V₂, as shown in FIG. 4, whose application will be more apparent below.

Thus, the pad member 3 may be deposited onto the impermeable layer 11 so configured, as shown in FIG. 4. The plate 9 may be then closed onto the plate 8 in the direction of arrow F₄ of FIG. 4, to prevent any undesired displacement of the layer 11.

The pad member 3 may comprise a layer of polymeric material which will be selected from the group including gels, rubbers, polyurethanes or the like, or combinations thereof.

The pad member 3 may be deposited into the mold either in the unformed, e.g monomer state, and then cured on site, or at least partly preformed in a previous process step, e.g. a previous step of at least partial curing of the gel, which may be carried out in the same mold 4 or in a separate mold,

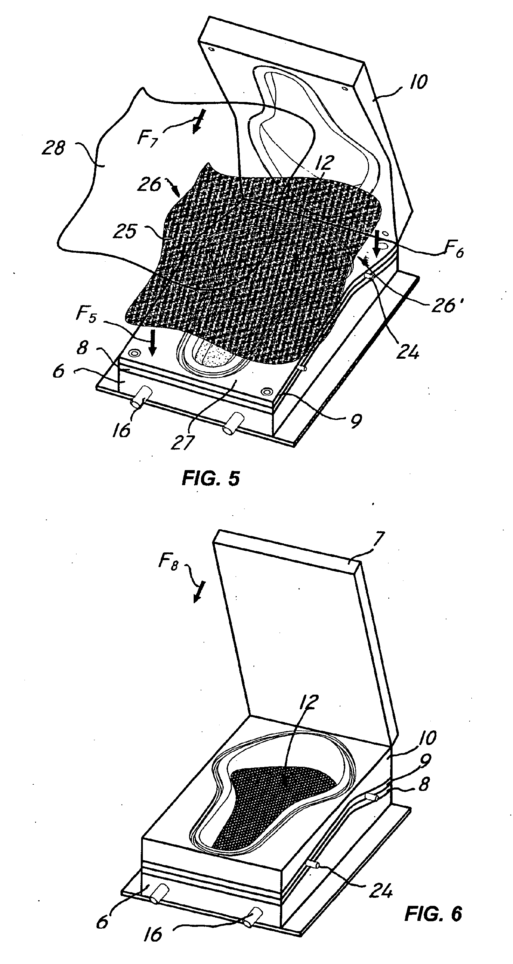

The next step may be the deposition of an air permeable skin 25, adapted to be impregnated with a thermosetting resin, into chamber 12. Then, the end portions 26, 26' of the skin 25 may be placed on the top surface 27 of the plate 9, in the direction of arrows F₅ and F₆ of FIG. 5. Alternatively, the skin 26 may be so sized that the ends 26, 26' do not lie on the surface 27, as shown in FIG. 7, so that vacuum may be more easily built-up in chamber 12.

Advantageously, the air permeable material of the skin 25 may be a fibrous material, preferably selected from the group comprising carbon fibers, glass fibers, Kevlar or combinations thereof.

The next step may be the deposition of at least one second layer 28 of a second airtight material onto the skin 25, for sealing the top opening 15 of the chamber 12, as shown in FIG. 5.

Advantageously, such second layer 28 may be made of the same polymeric material as the first layer 11. Nevertheless, any other material may be used for the purpose, as long as it is airtight, without departure from the scope as defined in the annexed claims.

The third interface plate 10 may be laid on the second airtight layer 28 in the direction of arrow F₇ of FIG. 5, to prevent any undesired displacement of such layer

The next step may be the connection of the duct 24, and hence of the chamber 12, to the vacuum source V₂. After the interposition of the first layer 11, which forms the bottom 14 and the walls 13, 13' of the chamber 12, between the first and the second interface plates 8 and 9, and the interposition of the second airtight layer 28, which seals the opening 15 of the chamber 12, between the second plate 9 and the third plate 10, the chamber 12 has one portion 29 only for allowing air passage at the pipe 24 disposed level with the plate 9, as clearly shown in FIG. 7.

As vacuum is applied to the chamber 12 by the means V₂, air will be almost completely removed therefrom, and the airtight layers 28 and 11 will adhered to the skin 25, which is thus in substantially total vacuum conditions.

Airtightness in the mold 4 may be further enhanced by using suitable seals 30, 30' and 30", e.g. of the annular type, to be fitted in special grooves 31, 31', 31" on the top surfaces of the plates 8, 9 and 10 respectively.

Correspondingly, once the mold 4 is sealed by joining the cover 7 to the plate 10 in the direction of arrow F₇ of FIG. 6, it may be heated to a predetermined temperature, possibly in a range from 80°C and 180°C and preferably of about 130°C. In any case, the heating temperature may be proximate the glass transition temperature of the resin employed. Alternatively, the cover 7 and the plate 10 may be integrally joined together, so that the mold 4 is actually composed of a female part 6, two plates 8 and 9 and a male part having the function of cover 7, without using a third separate plate 10.

Thus, polymerization of the thermosetting resin will be enhanced in substantially vacuum conditions, so that a frame 2 having excellent mechanical properties may be formed.

Advantageously, the skin 25 may be formed by application of a predetermined pressure above the second layer 28 to promote mutual bonding between the latter and the skin 25. The supply of high temperature pressurized air from the top has both the functions of forming the fame 2 and of facilitating ejection of residual air from the chamber 12, as well as of reducing the thermal gradient between the various layers, thereby reducing cycle operating times and any residual tension in the composite structure.

For this purpose, the mold 4 may comprise at least one duct 32 connected to a source P₁ for applying pressure on the layer 28, thereby deforming the skin 25. Thus, the mold 4 will act as an autoclave, with the support 1 being formed under vacuum, thus advantageously enhancing the mechanical properties thereof.

Conveniently, the predetermined pressure may be of 1 bar to 20 bar, and may be preferably of about 4 bar.

The above sequence of steps has been described by way of non limiting example of the invention. Therefore, it will be understood that such sequence may be changed, and further steps may be added or removed, without departure from the scope as defined in the annexed claims. For example, mold heating may occur in multiple steps, and an intermediate mold cooling step may be also provided.

From the foregoing disclosure, it is apparent that the process of the invention fulfills the intended objects and particularly meets the requirement of providing integral elastic supports having good mechanical properties.

Thanks to curing of the thermosetting resin substantially under vacuum, air bubbles can be prevented from forming in the chamber 12, whereby resin curing is optimized.

The process of this invention is susceptible of a number of modifications and changes. All the details thereof may be replaced by other technically equivalent parts, and the materials may vary depending on different needs.

While the process has been described with particular reference to the accompanying figures, the numerals referred to in the disclosure and claims are only used for the sake of a better intelligibility of the invention and shall not be intended to limit the claimed scope in any manner.

## Claims

1. A process for making integral elastic supports (1), such as seating surfaces, seats, saddles, human body supports, of the type comprising at least one substantially rigid or semi-rigid bearing frame (2) of composite material and a pad member (3) made of polymeric material,
**characterized in that** said frame (2) of composite material and said pad member (3) of polymeric material are both made by vacuum forming and curing, said pad member (3) being attached to the frame (2) upon formation of the latter, the process comprising the following steps:
- providing a mold (4) having at least one inner cavity (5) of a predetermined shape conforming to the external configuration of the support (1);
- opening said mold (4) and depositing at least one first layer (11) of a first airtight material into said cavity (5) to form a chamber (12) with side walls (13, 13'), a bottom wall (14) and a top opening (15);
- depositing a layer of said polymeric material susceptible to form said pad member (3) into said chamber (12), said pad member (3) being in the monomer state, respectively being partly preformed in a previous partial curing step;
- depositing at least one skin (25) of air permeable material impregnated with a thermosetting resin into said chamber (12);
- depositing at least one second layer (28) of a second airtight material onto said skin (25), for sealing the top opening (15) of said chamber (12);
- connecting said chamber (12) to a vacuum source (V₂);
- sealing said mold (4) and heating it to a predetermined temperature, to facilitate vacuum curing of said thermosetting resin and said polymeric material, while stably attaching said pad member (3) to said frame (2).

2. Process as claimed in claim 1, **characterized in that** it comprises a step of applying a predetermined pressure in said chamber (12) above said second layer (28) to facilitating ejection of residual air from the chamber (12).

3. Process as claimed in claim 2. **characterized in that** said step of applying pressure from the top is performed by high temperature pressurized air, in such a manner to reducing the thermal gradient between the various layers, thereby reducing cycle operating times and any residual tension in the composite structure.

4. Process as claimed is claim 2, **characterized in that** said predetermined pressure is of 1 bar to 20 bar, and is preferably of about 4 bar.

5. Process as claimed in claim 1, **characterized in that** said pad member (3) is made of a polymeric material selected from the group comprising gels, rubbers, polyurethanes or the like, or combinations thereof.

6. Process as claimed in claim 1, **characterized in that** said air permeable material is a fibrous material.

7. Process as claimed in claim 6, **characterized in that** said fibrous material is selected from the group comprising carbon fibers, glass fibers, Kevlar or combinations thereof.

8. Process as claimed in claim 6, **characterized in that** said fibrous material is preimpregnated, respectively dry and later impregnated with said thermosetting resin.

9. Process as claimed in claim 6, **characterized in that** said thermosetting resin is injected at said skin (25) of fibrous material.

10. Process as claimed in claim 1, **characterized in that** said first airtight layer is made of a polymeric material.

11. Process as claimed in claim 10, **characterized in that** said polymeric material is thermoplastic polyurethane or polyamide.

12. Process as claimed in claim 10, **characterized in that** said polymeric material is optically transparent.

13. Process as claimed in claim 1, **characterized in that** said second airtight layer (28) is made of the same polymeric material as the first layer (11).

14. Process as claimed in claim 1, **characterized in that** said predetermined temperature is of 80°C to 180°C and is preferably of about 130°C.

## Patentansprüche

1. Verfahren für die Herstellung einteiliger, elastischer Stützen (1) wie Sitzflächen, Sitze, Sättel, Stützen für den menschlichen Körper, die so beschaffen sind, dass sie wenigstens einen im Wesentlichen starren oder halbstarren, tragenden Rahmen (2) aus Verbundmaterial umfassen sowie ein Polsterelement (3) aus Polymermaterial, **dadurch gekennzeichnet, dass** sowohl der Rahmen (2) aus Verbundmaterial als auch das Polsterelement (3) aus Polymermaterial durch Vakuumformen und -vulkanisieren erzeugt werden, wobei das Polsterelement (3) bei der Formung des Rahmens (2) an diesem fixiert wird, und das Verfahren folgende Phasen umfasst:
- Vorbereitung eines Formwerkzeugs (4) mit wenigstens einem inneren Hohlraum (5) von vorbestimmter Form, der sich der äußeren Formgebung der Stütze (1) anpasst;
- Öffnen dieses Formwerkzeugs (4) und Einlegen von wenigstens einer ersten Schicht (11) eines ersten, luftundurchlässigen Materials in diesen Hohlraum (5) zur Formung einer Kammer (12) mit Seitenwänden (13, 13'), einer Rückenwand (14) und einer oberen Öffnung (15);
- Einlegen einer Schicht des besagten Polymermaterials für die Bildung des Polsterelements (3) in der Kammer (12), wobei sich das Polsterelement (3) im monomeren Zustand befindet beziehungsweise teilweise in einer vorhergegangenen Vulkanisationsphase vorgeformt wurde;
- Ablegen von wenigstens einer Haut (25) aus luftdurchlässigem, mit wärmehärtendem Harz imprägnierten Material in der Kammer (12);
- Ablegen von wenigstens einer zweiten Schicht (28) eines zweiten, luftdurchlässigem Materials auf die Haut (25) zum dichten Abschließen der oberen Öffnung (15) der Kammer (12);
- Verbindung der Kammer (12) mit einer Vakuumquelle (V₂);
- hermetische Schließung des Formwerkzeugs (4) und Erwärmung desselben auf eine vorbestimmte Temperatur zur Erleichterung der Vakuum-Vulkanisierung des besagten, wärmehärtenden Harzes und des besagten Polymermaterials, während das Polsterelement (3) fest am Rahmen (2) fixiert wird.

2. Verfahren gemäß Patentanspruch 1, **dadurch gekennzeichnet, dass** es eine Phase der Anwendung eines vorbestimmten Drucks in der Kammer (12) oberhalb der zweiten Schicht (28) umfasst, um das Entweichen der restlichen Luft aus der Kammer (12) zu erleichtern.

3. Verfahren gemäß Patentanspruch 2, **dadurch gekennzeichnet, dass** besagte Phase der Druckanwendung von oben durch unter Druck stehende Luft mit hoher Temperatur erfolgt, um den Temperaturgradienten zwischen den einzelnen Schichten und damit die Zykluszeiten sowie jegliche Restspannung in der Verbundstruktur zu reduzieren.

4. Verfahren gemäß Patentanspruch 2, **dadurch gekennzeichnet, dass** besagter, vorbestimmter Druck zwischen 1 und 20 bar liegt, und zwar vorzugsweise bei circa 4 bar.

5. Verfahren gemäß Patentanspruch 1, **dadurch gekennzeichnet, dass** das Polsterelement (3) aus einem aus der Gruppe der Gele, Gummis, Polyurethane oder ähnlichen Produkten bzw. Kombinationen daraus ausgewählten Polymermaterial besteht.

6. Verfahren gemäß Patentanspruch 1, **dadurch gekennzeichnet, dass** besagtes, luftdurchlässiges Material ein Fasermaterial ist.

7. Verfahren gemäß Patentanspruch 6, **dadurch gekennzeichnet, dass** besagtes Fasermaterial aus der Gruppe der Karbonfasern, Glasfasern, Kevlar oder Kombinationen daraus ausgewählt wurde.

8. Verfahren gemäß Patentanspruch 6, **dadurch gekennzeichnet, dass** besagtes Fasermaterial vorimprägniert ist, beziehungsweise trocken und anschließend mit besagtem wärmehärtenden Harz imprägniert wird.

9. Verfahren gemäß Patentanspruch 6, **dadurch gekennzeichnet, dass** besagtes wärmehärtendes Harz an der Haut (25) aus Fasermaterial eingespritzt wird.

10. Verfahren gemäß Patentanspruch 1, **dadurch gekennzeichnet, dass** die besagte erste, luftundurchlässige Schicht aus Polymermaterial besteht.

11. Verfahren gemäß Patentanspruch 10, **dadurch gekennzeichnet, dass** das besagte Polymermaterial thermoplastisches Polyurethan oder Polyamid ist.

12. Verfahren gemäß Patentanspruch 10, **dadurch gekennzeichnet, dass** das besagte Polymermaterial transparent ist.

13. Verfahren gemäß Patentanspruch 1, **dadurch gekennzeichnet, dass** die besagte zweite, luftundurchlässige Schicht (28) aus dem gleichen Polymermaterial besteht wie die erste Schicht (11).

14. Verfahren gemäß Patentanspruch 1, **dadurch gekennzeichnet, dass** besagte vorbestimmte Temperatur zwischen 80°C und 180°C liegt und vorzugsweise circa 130°C beträgt.

## Revendications

1. Procédé pour la réalisation de supports (1) élastiques intégraux comme les surfaces d'assise, les assises, les selles, les supports pour le corps humain, du type comprenant au moins un châssis (2) porteur substantiellement rigide ou semi-rigide en matériau composite et d'un élément de rembourrage (3) en matériau polymère, **caractérisé en ce que** ledit châssis (2) en matériau composite et ledit élément de rembourrage (3) en matériau polymère sont tous deux obtenus par moulage et vulcanisation sous vide, ledit élément de rembourrage (3) étant fixé au châssis (2) lors de la formation de ce dernier. Le procédé comprend les phases suivantes :
- préparation d'un moule (4) avec au moins une cavité interne (5) de forme prédéterminée qui s'adapte à la configuration externe du support (1) ;
- ouverture dudit moule (4) et dépôt d'au moins une première couche (11) d'un premier matériau imperméable à l'air dans ladite cavité (5) pour former une chambre (12) avec des parois latérales (13, 13'), une paroi de fond (14) et une ouverture supérieure (15) ;
- dépôt d'une couche dudit matériau polymère pour former ledit élément de rembourrage (3) dans ladite chambre (12), ledit élément de rembourrage (3) étant à l'état monomère, celui-ci ayant été respectivement préformé partiellement lors d'une phase précédente de vulcanisation partielle ;
- dépôt d'au moins une peau (25) de matériau perméable à l'air imprégnée de résine thermodurcissante dans ladite chambre (12);
- dépôt d'au moins une deuxième couche (28) d'un deuxième matériau imperméable à l'air sur ladite peau (25) pour fermer de manière étanche l'ouverture supérieure (15) de ladite chambre (12) ;
- raccordement de ladite chambre (12) à une source de vide (V₂) ;
- fermeture hermétique dudit moule (4) et chauffage de celui-ci à une température prédéterminée pour faciliter la vulcanisation sous vide de ladite résine thermodurcissante et dudit matériau polymère, tandis que ledit élément de rembourrage (3) est fixé de manière stable audit châssis (2).

2. Procédé selon la revendication 1, **caractérisé en ce qu'**il comprend une phase d'application d'une pression prédéterminée dans ladite chambre (12) sur ladite deuxième couche (28) pour faciliter l'expulsion de l'air résiduel de la chambre (12).

3. Procédé selon la revendication 2, **caractérisé en ce que** ladite phase d'application de pression par le haut est réalisée grâce à de l'air sous pression à haute température, de façon à réduire le gradient thermique entre les différentes couches, réduisant par la même les temps de travail du cycle et toute tension résiduelle dans la structure composite.

4. Procédé selon la revendication 2, **caractérisé en ce que** ladite pression prédéterminée est comprise entre 1 et 20 bars, de préférence autour de 4 bars.

5. Procédé selon la revendication 1, **caractérisé en ce que** ledit élément de rembourrage (3) est réalisé dans un matériau polymère sélectionné dans le groupe comprenant du gel, des caoutchoucs, des polyuréthanes ou des matériaux similaires, ou des combinaisons de ces matériaux.

6. Procédé selon la revendication 1, **caractérisé en ce que** ledit matériau perméable à l'air est un matériau fibreux.

7. Procédé selon la revendication 6, **caractérisé en ce que** ledit matériau fibreux est sélectionné dans le groupe comprenant des fibres de carbone, des fibres de verre, du Kevlar ou des combinaisons de ces matériaux.

8. Procédé selon la revendication 6, **caractérisé en ce que** ledit matériau fibreux est pré-imprégné, respectivement sec et par la suite imprégné de ladite résine thermodurcissante.

9. Procédé selon la revendication 6, **caractérisé en ce que** ladite résine thermodurcissante est injectée au niveau de ladite peau (25) de matériau fibreux.

10. Procédé selon la revendication 1, **caractérisé en ce que** ladite première couche imperméable à l'air est réalisée en matériau polymère.

11. Procédé selon la revendication 10, **caractérisé en ce que** ledit matériau polymère est du polyuréthane thermoplastique ou du polyamide.

12. Procédé selon la revendication 10, **caractérisé en ce que** ledit matériau polymère est transparent.

13. Procédé selon la revendication 1, **caractérisé en ce que** ladite deuxième couche imperméable à l'air (28) est réalisée avec le même matériau polymère que la première couche (11).

14. Procédé selon la revendication 1, **caractérisé en ce que** ladite température prédéterminée est comprise entre 80 et 180° C, de préférence autour de 130 C.
